# EUROPEAN PATENT SPECIFICATION

(11) **EP 0 242 807 B1**
(45) Date of publication and mention of the grant of the patent: **20.10.1993**
(21) Application number: 87105677.6
(22) Date of filing: 16.04.1987
(51) Int. Cl.: G01N 29/00

(54) **Method of measurement of residual stresses in the material of the object under test**
Verfahren zur Messung von Restspannungen im Stoff eines Prüfobjektes
Procédé pour mesurer des tensions résiduelles dans le matériau d'un objet sous test

(30) Priority: 18.04.1986 PL 259038
(43) Date of publication of application: 28.10.1987
(73) Proprietor: Polska Akademia Nauk Instytut Podstawowych Problemow Techniki, 00-049 Warszawa (PL)
(72) Inventor: Brokowski, Andrzej, PL-02-643 Warszawa (PL); Deputat, Julian, Pl-00-801 Warszawa (PL); Mizerski, Krzysztof, Pl-00-132 Warszawa (PL)
(74) Representative: Lehn, Werner, Dipl.-Ing.

(56) References cited:
- US-A- 4 033 182
- AUTOMATIC WELDING, vol. 39, no. 4, April 1986, Cambridge, US; O.I.GUSHCHA: "The acoustic method of evaluating the three dimensional stress state in the metal in welded joints", pages 15-16
- JOURNAL OF TESTING & EVALUATION, vol. 3, no. 2, March 1975, P.J.NORONHA et al.: "An Ultrasonic Technique for the Measurement of Residual Stress", pages 147-152

## Description

This invention relates to the method of measurement of residual stresses in the material of object under test, particularly in the objects with curved surfaces accessible from one side only.

Those skilled in Art know from the Polish Patent Specification No. 235,656 a method of ultrasonic measurement of stresses in the material of the object under test. According to that method, beams of at least two types of ultrasonic waves are introduced oblique to the surface of the object being tested. These waves are refracted at an angle of 90 degrees and the travel times of pulses of the subsurface waves of each type over a known path in the material of the object under test and in the reference material of a standard are measured. Next, the absolute value of stresses in the material of the object under test is calculated from the difference of the travel times.

The known method of ultrasonic measurements of residual stresses and the equipment for implementation thereof enable the values of longitudinal and traverse components of these stresses to be determined in the objects with plane surfaces being tested. The described method is not applicable in the case of the objects with curved surfaces.

Ultrasonic Testing Ed. J.Szilard. J.Wiley and Sons, Chichester; GB. 1982 pages 326-339, describes measurements of surface stress involving application of sub-surface longitudinal waves, sub-surface transverse (shear) waves Land surface waves.
Automatic Welding, vol. 39, no. 4, April 1986, pages 15,16, Cambridge US; O.I.Gushcha "The acoustic method of evaluating the three dimensional stress state in the metal in welded joints" refers to use of longitudinal and shear orthogonal polarisation waves.
US-A-4033182 describes measuring stress using transit times of longitudinal and shear waves.
Journal of Testing & Evaluation, vol. 3, no.2, March 1975, pages 147-152, P.J. Noronha et al:"An ultrasonic technique for the measurement of residual stress" refers to the use of mainly shear waves.

The aim of the invention is development of a method of non-destructive measurements of stresses in the material of the objects with curved surfaces subjected to two-dimensional state of stress, which method has higher measurement accuracy than previous methods.

The method acc. to the invention is defined in claim 1. Beams of ultrasonic waves of three types are thrown onto the surface of a cylindrical object under test within the measuring zone, said beams being refracted at an angle of 90 degrees. Next the travel time of subsurface longitudinal and traverse waves over a definite path propagating in the direction of the generatrix is measured and the travel time of surface waves propagating in the direction of the generatrix of a cylindrical object is determined. Finally, the absolute values of the components of stresses in the material under test in the directions of the cylinder generatrix and in the direction perpendicular to the direction of the cylinder generatrix are calculated from the differences of the travel times of ultrasonic waves in the material of a cylindrical object under test and in the reference material of a standard.

The method acc. to the invention makes possible measurements of the state of stress in cylindrical objects.

### Example of embodiment.

Travel time of longitudinal and transversal waves propagating along the generatrix over a known path and travel time of surface waves over the same path both in the direction of the generatrix of a cylinder are measured for a cylindrical object under test and next longitudinal and circumferential stress components are calculated from the values of elastoacoustic constants determined separately for a given material for the respective wave types and the values of the travel times in the material of a standard made of the same grade of material, but not stressed.

Beams of ultrasonic waves are produced by means of a set of ultrasonic probe-heads coupled with the object under test and connected to the measuring system of an ultrasonic equipment. Ultrasonic waves propagate parallel to the surface of the object under test.

The produced waves have various values of elastoacoustic constants, that is their speed of propagation depends to a different extent upon stress for a given kind of material. The travel time for each type of ultrasonic waves is measured in a differential system of a set of ultrasonic probe-heads including a transmitting head and two receiving heads situated at different distances from the transmitting head and arranged along a straight line and connected to a measuring system.

The described measuring system includes a time meter provided with a system for multiplication of the times of passage of ultrasonic pulses, as well as a generator with a counter connected thereto via a gate system controlled by a selector. Said counter counts the number of standard pulses during the time equal to multiple of times of passage of ultrasonic pulses between the respective transmitting and receiving head.

The time counter is provided with a system for visualization of ultrasonic pulses, as well as with a marker unit fitted with a tuned generator of rectangular pulses with the duration so suited as to obtain a V-shaped pulse after passage through an amplifier. Input of marker circuit is connected to the visualization circuit of ultrasonic pulses in such a way as to obtain addition of those pulses.

Use of the method of measurements enables the influence of attenuation connected with various states of stress on the accuracy of the measurements of stresses to be avoided. An accurate measurement of the travel time of the waves with simultaneous visualization of the received pulse and an precise setting of the time marker on the spot from which the time is to be measured enables the individual differences of the elastic constants of material of the object being tested to be taken into account.

In consequence, the method acc. to the invention makes possible measurements of absolute values of stresses. This has been made possible due to application of measurement of times of passage of various types of ultrasonic waves over the investigated fragment of the material each with different elastoacoustic constants. For surface and subsurface longitudinal waves propagation in the direction of generatrix we have the following relationships: 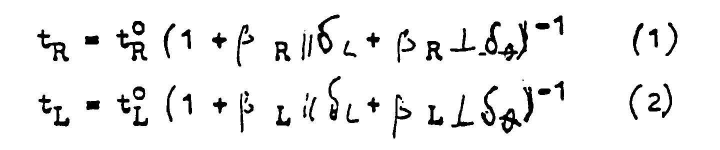
Travel time of subsurface transverse waves propagating in the direction of generatrix and polarized in radial direction does not depend upon stresses and it may be assumed that t_{T} = t$\frac{\text{o}}{\text{T}}$. Difference of the times of passage of longitudinal waves propagating in a reference non-stresses material in the object under test and in the material of a non-stresses standard made of the same material grade as the object under test may be expressed by difference of the times of passage of longitudinal waves: 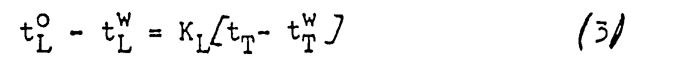
Similarly, for surface waves we will have: 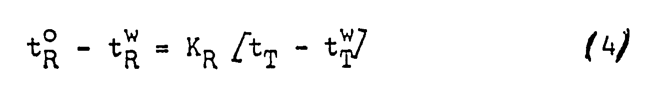
From relationships (1) and (2), taking also into account the relationships (3) and (4) we can calculate the values of stresses δ_{L} and δ_{ϑ}: 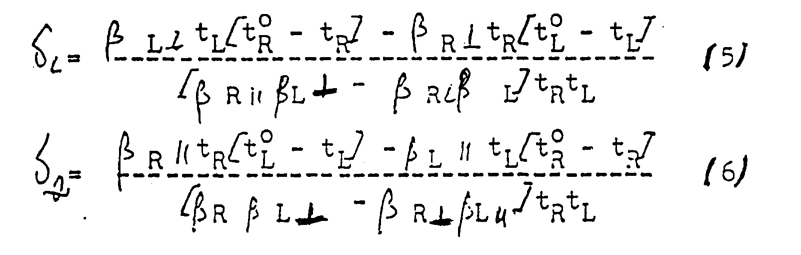
where in formulae (1) - (6) the individual symbole have the following significance: t_{R} - travel time of ++surface waves propagating in the direction of generatrix in the object under test over a definite path, t$\frac{\text{o}}{\text{R}}$ - travel time of surface waves which would propagate in the material under test if it had no stresses over the same path, β_{R∥} - elastoacoustic constant for the grade of the material under test for surface waves propagating parallel to the direction of stress /β_{R⊥} - elastoacoustic constant for the grade of the material under test for surface waves propagating in a direction perpendicular to the direction of stresses, δ_{L} - component of stress parallel to the direction of wave propagation, δ_{ϑ} - component of stress perpendicular to the direction of wave propagation, t_{L} - travel time of subsurface longitudinal wave in the material of the object under test over a definite path, t$\frac{\text{o}}{\text{L}}$ - travel time of subsurface longitudinal waves over the same path in the material under test, if it has no stress, β_{L∥} - elastoacoustic constant of the material for longitudinal waves propagating in the direction of stress, β_{L⊥} - elastoacoustic constant of the material for longitudinal waves propagating in a direction perpendicular to the direction of stress, t_{T} - travel time of subsurface transverse waves in the material of the object being tested over a definite path, t$\frac{\text{o}}{\text{T}}$ - time of passage of subsurface transverse waves ++++++++over the same path, if it has no stress, t$\frac{\text{w}}{\text{L}}$ - travel time of subsurface longitudinal waves over the same path in the material of a standard without any stresses, K_{L} - factor of proportionality between the variations of travel times for longitudinal and traverse waves for a given grade of material, t$\frac{\text{w}}{\text{R}}$ - travel time of surface waves over the same path in the material of a standard without any stresses, K_{R} - factor of proportionality between variations of the travel times of transverse waves and surface waves for a given grade of material.

The method has been used for the measurement of residual stresses in a heat treated cylindrical object. Moreover, measurements of the travel times of longitudinal, transverse and surface waves over a path of the same length have also been performed for the reference [non-stressed] material of a standard made of the same grade of steel, of which the cylindrical object under test has been made. Using specimens made of the same grade of steel the values of elastoacoustic constants have been determined for the individual modes of waves propagating in the direction of the generatrix. All values of the travel times have been referred to a temperature of 18 degrees Centrigrade.

The following data have been obtained:
Results of measurements for a cylindrical object being tested.
t_{L} = 33820 ns
t_{T} = 61554 ns
t_{R} = 64823 ns
Results of measurements for the reference standard
t$\frac{\text{w}}{\text{L}}$ = 33685 ns
t$\frac{\text{w}}{\text{T}}$ = 61581 ns
t$\frac{\text{w}}{\text{R}}$ = 65276 ns
Elastoacoustic constants of the material
β_{L∥} = -1,24 x 10⁻⁵ MPa⁻¹
β_{L⊥} = 0.10 x 10⁻⁵ MPa⁻¹
β_{R∥} = 0.87 x 10⁻⁵ MPa⁻¹
β_{R⊥} = -1.27 x 10⁻⁵ MPa⁻¹
Values of the travel times of longitudinal and surface waves calculated from the relationships (3) and (4) for (in) corresponding to the non-stresses material of the object under test are as follows:
t$\frac{\text{o}}{\text{L}}$ = 33685 - 0.55 [61554 - 61581] = 33700 ns
t$\frac{\text{o}}{\text{R}}$ = 65276 - 1.06 [61554 - 61581] = 65305 ns
After having substituted these values to formulae (5) and (6) we will obtain: δ_{L} = 253 MPa, δ_{ϑ} = 412 MPa.

## Claims

1. A method of ultrasonic measurement of stresses in a material of an object, comprising the steps:
a) introducing at least subsurface longitudinal, subsurface transversal and surface waves into a reference material free of stress;
b) measuring in the reference material free of stress
- the travel time (t$\frac{\text{w}}{\text{L}}$) of subsurface longitudinal waves,
- the travel time (t$\frac{\text{w}}{\text{T}}$) of subsurface transversal waves, and
- the travel time (t$\frac{\text{w}}{\text{R}}$) of surface waves;
c) introducing at least subsurface longitudinal, subsurface transversal and surface waves into the object under test with curved surfaces, such that the subsurface longitudinal waves and the subsurface transversal waves travel over a definite path in the direction of a generatrix of the object under test, and the surface waves propagate over the same path in the direction of the generatrix of the object;
d) measuring in the object under test
- the travel time (t_{L}) of subsurface longitudinal waves,
- the travel time (t_{T}) of subsurface transversal waves, and
- the travel time (t_{R}) of the surface waves;
e) determining for the object under test if it is free of stress,
the travel time (t$\frac{\text{o}}{\text{L}}$) of subsurface longitudinal waves from the relation 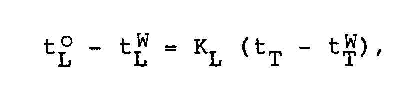 and
the travel time (t$\frac{\text{o}}{\text{R}}$) of surface waves from the relation 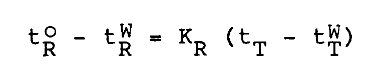 where K_{L} is a known factor of proportionality between the variations of travel times for ultrasonic longitudinal and transversal waves for a given grade of material, and
K_{R} is a known factor of proportionality between variations of travel times of ultrasonic surface waves and ultrasonic transversal waves for a given grade of material; and
f) determining stress values (δ_{L}, δ_{ϑ}) parallel to the direction of wave propagation and perpendicular to it from the measured travel times (t_{L}, t_{R}) of subsurface longitudinal waves and surface waves in the object under test, using a combination of the determined travel times (t$\frac{\text{o}}{\text{L}}$, t$\frac{\text{o}}{\text{R}}$) of ultrasonic subsurface longitudinal waves and ultrasonic surface waves in the object under test if it is free of stress, and known elastoacoustic constants (β_{R∥}, β_{R⊥}, β_{L∥}, β_{L⊥}) relating travel times of ultrasonic surface waves and subsurface longitudinal waves, respectively, to stress values in the direction of wave propagation and perpendicular thereto.

## Patentansprüche

1. Verfahren zum Messen von Spannungen in einem Material eines Objektes mit Ultraschall, mit den Schritten:
(a) Einführen von wenigstens longitudinalen, unter der Oberfläche verlaufenden, transversalen, unter der Oberfläche verlaufenden und Oberflächen-Wellen in ein spannungsfreies Referenzmaterial;
(b) in dem spannungsfreien Referenzmaterial Messen
- der Laufzeit (t$\frac{\text{w}}{\text{L}}$) von longitudinalen Wellen unter der Oberfläche,
- der Laufzeit (t$\frac{\text{w}}{\text{T}}$) von transversalen Wellen unter der Oberfläche, und
- der Laufzeit (t$\frac{\text{w}}{\text{R}}$) von Oberflächenwellen;
(c) Einführen von wenigstens longiutdinalen, unter der Oberfläche laufenden, transversalen, unter der Oberfläche laufenden und Oberflächen-Wellen in das Testobjekt mit gekrümmten Oberflächen, so daß die longitudinalen Wellen unter der Oberfläche und die transversalen Wellen unter der Oberfläche über einen definierten Pfad in der Richtung einer Generatrix des Testobjektes laufen, und die Oberflächenwellen sich über denselben Pfad in der Richtung der Generatrix des Objektes ausbreiten;
(d) im Testobjekt Messen
- der Ausbreitungszeit (t_{L}) von longitudinalen Wellen unter der Oberfläche,
- der Ausbreitungszeit (t_{T}) von transversalen Wellen unter der Oberfläche, und
- der Ausbreitungszeit (t_{R}) der Oberflächenwellen;
(e) für das Testobjekt, wenn dieses frei von Spannungen ist, Bestimmen
der Laufzeit (t$\frac{\text{o}}{\text{L}}$) von longitudinalen Wellen unter der Oberfläche aus der Beziehung 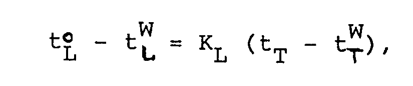 und
der Laufzeit (t$\frac{\text{o}}{\text{R}}$) von Oberflächenwellen aus der Beziehung 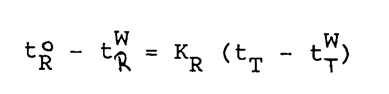 worin K_{L} ein bekannter Proportionalitätsfaktor zwischen den Laufzeitänderungen für longitudinale und transversale Ultraschallwellen für eine gegebene Materialqualität ist, und
K_{R} ein bekannter Proportionalitätsfaktor zwischen Laufzeitänderungen von Oberflächen-Ultraschallwellen und transversalen Ultraschallwellen für eine gegebene Materialqualität ist; und
(f) Bestimmen von Spannungswerten (δ_{L}, δ_{ϑ}) parallel zu der Wellenausbreitungsrichtung und rechtwinklig dazu aus den gemessenen Laufzeiten (t_{L}, t_{R}) von longitudinalen Wellen unter der Oberfläche und Oberflächenwellen in dem Testobjekt, wobei eine Kombination der bestimmten Laufzeiten (t$\frac{\text{o}}{\text{L}}$, t$\frac{\text{o}}{\text{R}}$) von Ultraschallwellen unter der Oberfläche und
Ultraschall-Oberflächenwellen in dem Testobjekt, wenn dieses frei von Spannungen ist, sowie bekannte elasto-akustische Konstanten (β_{R∥}, β_{R⊥}, β_{L∥}, β_{L⊥}) verwendet werden, welche Laufzeiten von Ultraschall-Oberflächenwellen bzw. longitudinale Wellen unter der Oberfläche in Beziehung setzen zu Spannungswerten in der Wellenausbreitungsrichtung und rechtwinklig dazu.

## Revendications

1. Procédé de mesure ultrasonique des contraintes dans le matériau d'un objet, comprenant les étapes consistant à :
a) introduire dans un matériau de référence exempt de contraintes au moins des ondes longitudinales de sous-surface, transversales de sous-surface et de surface;
b) mesurer dans le matériau de référence exempt de contraintes :
- le temps de propagation (t$\frac{\text{w}}{\text{L}}$) des ondes longitudinales de sous-surface,
- le temps de propagation (t$\frac{\text{w}}{\text{T}}$) des ondes transversales de sous-surface, et
- le temps de propagation (t$\frac{\text{w}}{\text{R}}$) des ondes de surface;
c) introduire dans l'objet sous test aux surfaces incurvées au moins des ondes longitudinales de sous-surface, transversales de sous-surface et de surface, de façon que les ondes longitudinales de sous-surface et les ondes transversales de sous-surface se propagent suivant un trajet défini dans la direction d'une génératrice de l'objet sous test, et que les ondes de surface se propagent suivant le même trajet dans la direction de la génératrice de l'objet;
d) mesurer dans l'objet sous test
- le temps de propagation (T_{L}) des ondes longitudinales de sous-surface,
- le temps de propagation (t_{T}) des ondes transversales de sous-surface, et
- le temps de propagation (T_{R}) des ondes de surface;
e) déterminer pour l'objet sous test s'il est exempt de contraintes,
le temps de propagation (t$\frac{\text{o}}{\text{L}}$) des ondes longitudinales de sous-surface d'après la relation: 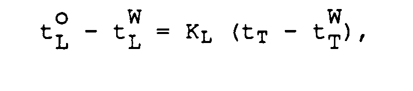 et
le temps de propagation (t$\frac{\text{o}}{\text{R}}$) des ondes de surface d'après la relation 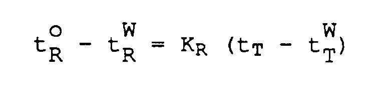 dans laquelle K_{L} est un facteur de proportionnalité connu entre les variations des temps de propagation pour des ondes ultrasoniques longitudinales et transversales pour une qualité donnée d'un matériau; et
K_{R} est un facteur de proportionnalité connu entre les variations des temps de propagation des ondes ultrasoniques de surface et des ondes ultrasoniques transversales pour une qualité donnée d'un matériau; et
f) déterminer les valeurs des contraintes (δ_{L}, δ_{ϑ}) parallèles au sens de propagation des ondes et perpendiculaires à celui-ci d'après les temps de propagation mesurés (t_{L}, t_{R}) des ondes longitudinales de sous-surface et des ondes de surface dans l'objet sous test, en utilisant une combinaison des temps de propagation déterminés (t$\frac{\text{o}}{\text{L}}$, t$\frac{\text{o}}{\text{R}}$) des ondes ultrasoniques longitudinales de sous-surface et des ondes ultrasoniques de surface dans l'objet sous test s'il est exempt de contraintes, et des constantes élastoacoustiques connues (β_{R∥}, β_{R⊥}, β_{L∥}, β_{R⊥}) liant les temps de propagation d'ondes ultrasoniques de surface et d'ondes longitudinales de sous-surface, respectivement, à des valeurs de contraintes dans le sens de propagation des ondes et dans le sens perpendiculaire à celui-ci.
